# EUROPÄISCHE PATENTANMELDUNG

(11) **EP 2 241 734 A1**
(43) Veröffentlichungstag der Anmeldung: **20.10.2010**
(21) Anmeldenummer: 09174660.2
(22) Anmeldetag: 30.10.2009
(51) Int. Cl.: F02B 37/007, F02B 37/18, F02B 39/00, F02F 1/24, F02F 1/36

(54) **Zylinderkopf mit Turbinen und Verfahren zum Betreiben einer Brennkraftmaschine mit einem derartigen Zylinderkopf**

(30) Priorität: 03.04.2009 EP 09157264
(71) Anmelder: Ford Global Technologies, LLC, Dearborn, MI 48126 (US)
(72) Erfinder: Kuhlbach, Kai, 51427, Bergisch Gladbach (DE)
(74) Vertreter: Drömer, Hans-Carsten

(57) **Zusammenfassung**

Die Erfindung betrifft einen Zylinderkopf (1) mit parallel angeordneten Turbinen (2a, 2b), der
- mindestens zwei Zylinder (3) aufweist, wobei jeder Zylinder (3) mindestens eine Auslaßöffnung (4) zum Abführen der Abgase aus dem Zylinder (3) aufweist und sich an jede Auslaßöffnung (4) eine Abgasleitung (5) anschließt, und bei dem
- die Abgasleitungen (5) von mindestens zwei Zylindern (3) unter Ausbildung eines integrierten Abgaskrümmers (6) innerhalb des Zylinderkopfes (1) zu einer Gesamtabgasleitung (7) zusammenführen, wobei stromabwärts des Abgaskrümmers (6) zwei parallel angeordnete unterschiedlich große Turbinen (2a, 2b) vorgesehen sind.

Des Weiteren betrifft die Erfindung ein Verfahren zum Betreiben einer Brennkraftmaschine mit einem derartigen Zylinderkopf (1).

Es soll ein Zylinderkopf (1) der oben genannten Art bereitgestellt werden, der im Vergleich zum Stand der Technik kostengünstiger ist und bei dem beide Turbinen (2a, 2b) motornah angeordnet sind.

Gelöst wird diese Aufgabe durch einen Zylinderkopf (1), der dadurch gekennzeichnet ist, dass
- die zwei Turbinen (2a, 2b) ein gemeinsames Turbinengehäuse (8) aufweisen, welches zum Zuführen von Abgas mit einem Eintrittsbereich (9) ausgestattet ist, wobei der Gehäuseteil (8b) des Turbinengehäuses (8), welcher die größere Turbine (2b) aufnimmt, zur Ausbildung einer Flüssigkeitskühlung mit mindestens einem Kühlmittelmantel (17) ausgestattet ist.

## Beschreibung

Die Erfindung betrifft einen Zylinderkopf mit parallel angeordneten Turbinen, der
- mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei dem
- die Abgasleitungen von mindestens zwei Zylindern unter Ausbildung eines integrierten Abgaskrümmers innerhalb des Zylinderkopfes zu einer Gesamtabgasleitung zusammenführen, wobei stromabwärts des Abgaskrümmers zwei parallel angeordnete unterschiedlich große Turbinen vorgesehen sind.

Des Weiteren betrifft die Erfindung ein Verfahren zum Betreiben einer Brennkraftmaschine mit einem Zylinderkopf der genannten Art.

Brennkraftmaschinen verfügen über einen Zylinderblock und einen Zylinderkopf, die zur Ausbildung der einzelnen Zylinder, d. h. Brennräume, miteinander verbunden werden. Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus.

Der Zylinderkopf dient üblicherweise zur Aufnahme des Ventiltriebs. Um den Ladungswechsel zu steuern, benötigt eine Brennkraftmaschine Steuerorgane, beispielsweise Hubventile, und Betätigungseinrichtungen zur Betätigung der Steuerorgane. Im Rahmen des Ladungswechsels erfolgt das Ausschieben der Verbrennungsgase über die Auslaßöffnungen und das Füllen des Brennraums, d. h. das Ansaugen des Frischgemisches bzw. der Frischluft über die Einlaßöffnungen. Der für die Bewegung der Ventile erforderliche Ventilbetätigungsmechanismus einschließlich der Ventile selbst wird als Ventiltrieb bezeichnet.

Es ist die Aufgabe des Ventiltriebes die Einlaß- und Auslaßöffnungen der Brennkammer rechtzeitig freizugeben bzw. zu verschließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives, d. h. vollständiges Abführen der Abgase zu gewährleisten. Daher werden Brennkammern auch häufig und zunehmend mit zwei oder mehr Einlaß- bzw. Auslaßöffnungen ausgestattet.

Die Einlaßkanäle, die zu den Einlaßöffnungen führen, und die Auslaßkanäle bzw. Abgasleitungen, die sich an die Auslaßöffnungen anschließen, sind nach dem Stand der Technik zumindest teilweise im Zylinderkopf integriert. Vorliegend werden die Abgasleitungen von mindestens zwei Zylindern innerhalb des Zylinderkopfes zu einer Gesamtabgasleitung zusammengeführt. Die Zusammenführung von Abgasleitungen zu einer Gesamtabgasleitung wird im Allgemeinen und im Rahmen der vorliegenden Erfindung als Abgaskrümmer bezeichnet.

Stromabwärts des Abgaskrümmers werden die Abgase gegebenenfalls weiteren Aggregaten zugeführt, beispielsweise einer Turbine, insbesondere einer Turbine eines Abgasturboladers, und/oder einem Abgasnachbehandlungssystem.

Beim Einsatz eines Abgasturboladers ist man grundsätzlich bemüht, die Turbine des Laders möglichst nahe am Auslaß der Brennkraftmaschine bzw. des Zylinderkopfes anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Zudem soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

Die thermische Trägheit des Teilstücks der Abgasleitungen zwischen Auslaßöffnung am Zylinder und Abgasnachbehandlungssystem bzw. zwischen Auslaßöffnung am Zylinder und Turbine sollte daher auch möglichst gering sein, was durch Reduzierung der Masse und der Länge der entsprechenden Teilstücke erreicht werden kann.

Um die genannten Ziele zu erreichen, ist es sinnvoll die Abgasleitungen - wie bei dem erfindungsgemäßen Zylinderkopf - unter Ausbildung eines integrierten Abgaskrümmers innerhalb des Zylinderkopfes zusammenzuführen. Die Länge der Abgasleitungen wird durch die Integration in den Zylinderkopf verringert, wodurch nicht nur die thermische Trägheit des Abgassystems stromaufwärts einer in der Gesamtabgasleitung vorgesehenen Turbine verringert, sondern auch das Leitungsvolumen, d. h. das Abgasvolumen der Abgasleitungen stromaufwärts der Turbine, verkleinert wird. Dadurch verbessert sich das Ansprechverhalten der Turbine und die Enthalpie der Abgase am Eintritt in die Turbine erhöht sich.

Während sich eine einzelne Turbine durch Integration des Krümmers ohne weiteres motornah, d. h. nahe am Zylinderkopf, positionieren läßt, erweist es sich nach dem Stand der Technik aber als problematisch, mehrere Turbinen gleichzeitig motornah anzuordnen, wenn beispielsweise wie bei dem Zylinderkopf, der Gegenstand der vorliegenden Erfindung ist, stromabwärts des Abgaskrümmers zwei parallel angeordnete Turbinen vorzusehen sind.

Häufig werden aufgeladene Brennkraftmaschinen aber mit mehreren Abgasturboladern ausgestattet, um die Drehmomentcharakteristik der Brennkraftmaschine zu verbessern. Hintergrund dieser Maßnahme ist, dass bei Einsatz eines einzelnen Turboladers in der Regel ein starker Drehmomentabfall bei Unterschreiten einer bestimmten Drehzahl zu beobachten ist.

Verständlich wird dieser Drehmomentabfall, wenn berücksichtigt wird, dass das Ladedruckverhältnis vom Turbinendruckverhältnis abhängt. Wird beispielsweise bei einem Dieselmotor die Motordrehzahl verringert bzw. bei einem Ottomotor die Last reduziert, führt dies zu einem kleineren Abgasmassenstrom, der ein kleineres Turbinendruckverhältnis und damit ein kleineres Ladedruckverhältnis zur Folge hat, was einem Drehmomentabfall gleichkommt.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden. Beispielsweise durch eine kleine Auslegung des Turbinenquerschnittes und gleichzeitiger Abgasabblasung, wobei die Abgasabblasung mittels Ladedruck oder mittels Abgasdruck gesteuert wird. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat aber den Nachteil, dass das Aufladeverhalten bei höheren Drehzahlen unbefriedigend ist.

Daher ist es zur Verbesserung der Drehmomentcharakteristik einer aufgeladenen Brennkraftmaschine vorteilhaft, eine einzelne Turbine durch zwei parallel angeordnete Turbinen von kleinerem Turbinenquerschnitt zu ersetzen.

Eine derartige Konfiguration der Turbinen gestattet es beispielweise, eine der beiden Turbinen bei kleineren Abgasmengen zu deaktivieren und das gesamte Abgas einer einzigen Turbine von kleinem Querschnitt zu zuführen, um auf diese Weise bei nur geringen Abgasmengen ausreichend hohe Ladedrücke zu generieren. Überschreitet die Abgasmenge eine vorgebbare Abgasmenge, wird die zweite Turbine aktiviert, d. h. zugeschaltet. Zum Aktivieren bzw. Deaktivieren kann ein Steuerelement vorgesehen werden, welches der Aufteilung des Abgasmassenstroms auf die beiden Turbinen dient.

Bei herkömmlichen Konfigurationen mit zwei Abgasturboladern wird der Abgasstrom außerhalb des Zylinderkopfes in Teilströme aufgespalten, die den beiden Turbinen getrennt zugeführt werden. Hierzu verzweigt sich die Gesamtabgasleitung in zwei separate Abgasleitungen. Stromabwärts der ausgebildeten Verzweigung wird dann in jeder der beiden Abgasleitungen eine einzelne Turbine positioniert. Da die Aufteilung der Gesamtabgasleitung in zwei voneinander getrennte Abgasleitungen eine gewisse Wegstrecke benötigt und die beiden Abgasleitungen auch einen ausreichend großen Abstand zueinander aufweisen müssen, um den Turbinen bzw. den Turbinengehäusen den erforderlichen Bauraum bereitzustellen, ist es nach dem Stand der Technik nicht möglich, beide Turbinen parallel und gleichzeitig motornah anzuordnen.

Ein weiteres Problem bei der Verwendung mehrerer Turbinen stellen die hohen Herstellungskosten dar, die infolge des erhöhten Materialbedarfs steigen. Der für das thermisch hochbelastete Turbinengehäuse verwendete - häufig nickelhaltige - Werkstoff ist zudem vergleichsweise kostenintensiv, insbesondere im Vergleich zu dem für den Zylinderkopf verwendeten Werkstoff; beispielweise Aluminium.

Vor dem Hintergrund des oben Gesagten ist es eine Aufgabe der vorliegenden Erfindung, einen Zylinderkopf mit parallel angeordneten Turbinen gemäß dem Oberbegriff des Anspruchs 1 bereitzustellen, der im Vergleich zum Stand der Technik kostengünstiger ist und bei dem beide Turbinen motornah angeordnet sind.

Eine weitere Teilaufgabe der vorliegenden Erfindung ist es, ein Verfahren zum Betreiben einer Brennkraftmaschine mit einem derartigen Zylinderkopf aufzuzeigen.

Gelöst wird die erste Aufgabe durch einen Zylinderkopf mit parallel angeordneten Turbinen, der
- mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei dem
- die Abgasleitungen von mindestens zwei Zylindern unter Ausbildung eines integrierten Abgaskrümmers innerhalb des Zylinderkopfes zu einer Gesamtabgasleitung zusammenführen, wobei stromabwärts des Abgaskrümmers zwei parallel angeordnete unterschiedlich große Turbinen vorgesehen sind,
   und der dadurch gekennzeichnet ist, dass
- die zwei Turbinen ein gemeinsames Turbinengehäuse aufweisen, welches zum Zuführen von Abgas mit einem Eintrittsbereich ausgestattet ist, wobei der Gehäuseteil des Turbinengehäuses, welcher die größere Turbine aufnimmt, zur Ausbildung einer Flüssigkeitskühlung mit mindestens einem Kühlmittelmantel ausgestattet ist.

Erfindungsgemäß weisen die zwei parallel angeordneten Turbinen ein gemeinsames Turbinengehäuse auf. Das eine gemeinsame Gehäuse ist weniger materialintensiv, d. h. benötigt weniger Material als zwei separate Turbinengehäuse, was zu einer Kostenersparnis führt.

Die Versorgung beider Turbinen mit Abgas erfolgt dabei über einen gemeinsamen Eintrittsbereich. Die Aufteilung des via Krümmer abgeführten Abgasstroms auf die Turbinen erfolgt vorzugsweise im Turbinengehäuse selbst, sofern der momentane Betrieb der Brennkraftmaschine dies erfordert bzw. vorsieht, weshalb beide Turbinen motornah am Zylinderkopf positioniert werden können. Die Aufteilung des Abgasstroms auf die Turbinen kann aber auch bereits im Zylinderkopf erfolgen, wobei der gemeinsame Eintrittsbereich dann mit zwei voneinander getrennten Eintrittskanälen auszubilden ist, welche die beiden Turbinen getrennt voneinander mit Abgas versorgen.

Neben den bereits weiter oben, d. h. eingangs, genannten Vorteilen einer motornahen Anordnung der Turbinen gestattet die erfindungsgemäße Ausbildung der beiden parallel angeordneten Turbinen in einem einzelnen gemeinsamen Gehäuse ein dichtes Packaging der gesamten Antriebseinheit.

Aufgrund der Ausstattung des Turbinengehäuses mit mindestens einem Kühlmittelmantel kann auf die Verwendung thermisch hochbelastbarer Werkstoffe zur Herstellung der Turbine bzw. des Turbinengehäuses vollständig oder zumindest teilweise verzichtet werden. Der Einsatz kostenintensiver, beispielsweise nickelhaltiger, Werkstoffe ist nicht erforderlich bzw. stark reduziert. Dies reduziert die Herstellungskosten weiter, auch weil die Bearbeitungskosten thermisch hochbelastbarer Werkstoffe grundsätzlich höher sind.

Eine Flüssigkeitskühlung des Gehäuses hat auch bezüglich des Steuerelements Vorteile, soweit das Steuerelement gemäß einer bevorzugten Ausführungsform im Gehäuse, beispielsweise im Eintrittsbereich, angeordnet ist. Im Gegensatz zu Ausführungen nach dem Stand der Technik, bei denen das Steuerelement zur Aufteilung des Abgasstromes auf einem ungekühlten Teilstück der Gesamtabgasleitung bzw. einer Abgasleitung angeordnet ist, kann der im Turbinengehäuse integrierte Kühlmittelmantel erfindungsgemäß auch zur Kühlung des Steuerelementes herangezogen werden.

Mit dem erfindungsgemäßen Zylinderkopf wird - wie dargelegt - die erste der Erfindung zugrunde liegende Aufgabe gelöst, nämlich einen Zylinderkopf mit parallel angeordneten Turbinen bereitzustellen, der im Vergleich zum Stand der Technik kostengünstiger ist und bei dem beide Turbinen motornah angeordnet sind.

Erfindungsgemäß wird der Gehäuseteil des Turbinengehäuses, der die größere Turbine beherbergt, mit mindestens einem Kühlmittelmantel ausgestattet, d. h. gekühlt. Hintergrund dieser Maßnahme ist, dass dieser Gehäuseteil in der Regel thermisch stärker beansprucht wird als der Gehäuseteil, in welchem die kleinere Turbine untergebracht ist, da durch die kleine Turbine erfindungsgemäß nur geringe Abgasmengen strömen, welche den dazugehörigen Gehäuseteil thermisch weniger stark belasten. Des Weiteren muß berücksichtigt werden, dass eine Kühlung des Gehäuseteils der größeren Turbine immer auch zu einer indirekten Kühlung des Gehäuseteils der kleineren Turbine führt.

Nichtsdestotrotz kann auch der Gehäuseteil des Turbinengehäuses, welcher die kleinere Turbine aufnimmt, zur Ausbildung einer Flüssigkeitskühlung mit mindestens einem Kühlmittelmantel ausgestattet sein.

Weitere vorteilhafte Ausführungsformen des Zylinderkopfes werden in Zusammenhang mit den Unteransprüchen erörtert.

Vorteilhaft sind Ausführungsformen des Zylinderkopfes, bei denen ein Steuerelement zur Aufteilung des Abgasstroms auf die beiden Turbinen vorgesehen ist. Ein Steuerelement gestattet eine Variation der den beiden Turbinen zugeführten Teilabgasströme.

Vorteilhaft sind dabei Ausführungsformen des Zylinderkopfes, bei denen das Steuerelement im Gehäuse angeordnet ist. Diese Ausführungsform zeichnet sich dadurch aus, dass kein zusätzlicher Bauraum im Motorraum beansprucht wird. Die Integration des Steuerelements in das Gehäuse ermöglicht den Einsatz eines Steuerelements ohne zusätzlichen Raumbedarf.

Die thermische Belastung des Steuerelementes wird durch die Flüssigkeitskühlung des Gehäuses begrenzt, so dass auf die Verwendung kostenintensiver wärmebeständiger Werkstoffe zur Ausbildung des Steuerelements verzichtet werden kann. Die Reduzierung der thermischen Belastung verringert zudem die Störanfälligkeit des Steuerelementes.

Vorteilhaft sind Ausführungsformen des Zylinderkopfes, bei denen das Turbinengehäuse und der Zylinderkopf separate Bauteile darstellen, welche kraftschlüssig, formschlüssig und/oder stoffschlüssig miteinander verbunden sind.

Ein modularer Aufbau, bei dem die Turbine bzw. das Gehäuse und der Zylinderkopf separate Bauteile darstellen und im Rahmen der Montage miteinander verbunden werden, hat den Vorteil, dass einerseits die Turbine mit anderen Zylinderköpfen und andererseits der Zylinderkopf mit anderen Turbinen nach dem Baukastenprinzip kombiniert werden können.

Die vielfältige Einsetzbarkeit eines Bauteils erhöht in der Regel die Stückzahl, wodurch die Stückkosten gesenkt werden. Zudem werden die Kosten gesenkt, die entstehen, wenn die Turbine bzw. der Zylinderkopf infolge eines Defekts auszutauschen, d. h. zu ersetzen ist. Der modulare Aufbau gestattet zudem das Nachrüsten von bereits auf dem Markt befindlichen Brennkraftmaschinen bzw. bestehenden Konzepten, d. h. die Ausbildung eines erfindungsgemäßen Zylinderkopfes unter Verwendung eines vorhandenen Zylinderkopfes und zwei in einem gemeinsamen Gehäuse angeordneten Turbinen.

Vorteilhaft sind aber auch Ausführungsformen, bei denen das Turbinengehäuse zumindest teilweise im Zylinderkopf integriert ist, so dass der Zylinderkopf und zumindest ein Teil des Turbinengehäuses ein monolithisches Bauteil bilden.

Prinzipbedingt entfällt durch die einteilige Ausbildung die Notwendigkeit einer gasdichten, thermisch hochbelastbaren und kostenintensiven Verbindung von Zylinderkopf und Turbinengehäuse, was Kostenvorteile bietet. Es besteht auch nicht die Gefahr, dass Abgas infolge einer Leckage ungewollt in die Umgebung austritt.

Es kann eine besonders motornahe Anordnung der Turbinen realisiert werden, weil ein Zugriff für Montagewerkzeuge nicht mehr vorgesehen werden muß, was die konstruktive Auslegung des Turbinengehäuses vereinfacht und eine Optimierung hinsichtlich des Betriebs der Turbinen gestattet. Das Gehäuse kann vergleichsweise kleinvolumig ausgebildet und die Laufräder der Turbinen können in der Nähe zum Eintrittsbereich angeordnet werden, was bei Berücksichtigung eines Montagezugriffs nicht ohne weiteres möglich ist.

Sind das Turbinengehäuse und der Zylinderkopf flüssigkeitsgekühlt und soll der im Turbinengehäuse integrierte Kühlmittelmantel via Zylinderkopf mit Kühlmittel versorgt werden, macht eine zumindest teilweise Integration des Turbinengehäuses in den Zylinderkopf das Verbinden der beiden Kühlkreisläufe bzw. Kühlmittelmäntel im Sinne einer Anordnung von zusätzlichen Leitungen entbehrlich.

Dabei kann auch ein im Zylinderkopf integrierter Kühlmittelmantel den im Gehäuse vorgesehenen Kühlmittelmantel mit ausbilden, so dass eine Verbindung von zwei originär unabhängigen Kühlmänteln im eigentlichen Sinne nicht mehr vorliegt bzw. auszubilden ist. Bezüglich der Kühlmittelkreisläufe bzw. dem Verbinden der Kühlmittelmäntel und der Leckage von Kühlmittel gilt das im Hinblick auf den Abgasstrom bereits Gesagte in analoger Weise.

Eine Ölversorgungsleitung kann ebenfalls implementiert werden, d. h. die Versorgung der Turbinen mit Öl zwecks Schmierung der Turbinenwellen kann über eine Leitung erfolgen, welche in den Zylinderkopf und das Gehäuse integriert ist. Eine externe Leitung zur Ölversorgung wird vermieden und damit die Ausbildung und Abdichtung der Verbindungsstellen zwischen Leitung und Gehäuse bzw. zwischen Leitung und Zylinderkopf. Das Öl kann dem Zylinderkopf entnommen und dem Gehäuse bzw. den Turbinen zugeführt werden, ohne dass die Gefahr einer Leckage besteht. Des Weiteren führt die Integration der Leitung zu einer Verringerung der Anzahl an Bauteilen und zu einer kompakteren Bauweise.

Vorteilhafterweise wird das monolithische Bauteil als gegossenes Bauteil ausgebildet, vorzugsweise aus Aluminium, wodurch eine besonders hohe Gewichtsersparnis erzielt wird im Vergleich zur Verwendung von Stahl. Die Kosten für die Bearbeitung des Aluminiumgehäuses sind ebenfalls geringer.

Nichtsdestotrotz kann das monolithische Bauteil auch aus Grauguß oder anderen Gußmaterialien hergestellt werden. Denn unabhängig vom verwendeten Material bleiben die Vorteile eines monolithisch ausgebildeten Bauteils gemäß der in Rede stehenden Ausführungsform erhalten, beispielsweise die kompakte Bauweise, die Gewichts- und Bauraumersparnis durch den Wegfall der nicht notwendigen Verbindungen und Verbindungselemente und das verbesserte Ansprechverhalten der Turbinen infolge der überaus motornahen Anordnung.

Falls es sich um Turbinen eines Abgasturboladers handelt, sind in diesem Zusammenhang auch Ausführungsformen vorteilhaft, bei denen die Welle des Abgasturboladers mitsamt dem vormontierten Turbinen- und Verdichterlaufrad als eigenständige vorgefertigte Baugruppe, beispielsweise in Form einer Kassette, in das im Zylinderkopf integrierte Turbinengehäuse bzw. Turboladergehäuse eingeschoben wird. Dies verkürzt die Montagezeit erheblich.

Dabei nimmt das Gehäuse nicht nur Turbinenkomponenten, sondern auch Teile des Verdichters auf, was grundsätzlich, d. h. bei sämtlichen erfindungsgemäßen Ausführungsformen der Fall sein kann, soweit ein Abgasturbolader eingesetzt wird, d. h. mindestens eine Turbine Teil eines Abgasturboladers ist. Insoweit dient das Gehäuse auch als Verdichtergehäuse.

Vorteilhaft sind Ausführungsformen des Zylinderkopfes, bei denen der Zylinderkopf mit einem zumindest teilweise im Zylinderkopf integrierten Kühlmittelmantel ausgestattet ist.

Der erfindungsgemäße Zylinderkopf verfügt über einen integrierten Abgaskrümmer und ist daher thermisch höher belastet als ein herkömmlicher Zylinderkopf, der mit einem externen Krümmer ausgestattet ist, weshalb höhere Anforderungen an die Kühlung gestellt werden.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung des Zylinderkopfes mit einem Kühlmittelmantel, d.h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Zylinderkopfes abgeführt und in einem Wärmetauscher dem Kühlmittel wieder entzogen.

Vorzugsweise sollte die Kühlleistung derart hoch sein, dass auf eine Anfettung (λ < 1) zur Absenkung der Abgastemperaturen, die hinsichtlich des Kraftstoffverbrauchs der Brennkraftmaschine und hinsichtlich der Schadstoffemissionen als nachteilig anzusehen ist, verzichtet werden kann. Denn im Rahmen einer Anfettung wird mehr Kraftstoff eingespritzt als mit der bereitgestellten Luftmenge überhaupt verbrannt werden kann, wobei der zusätzliche Kraftstoff ebenfalls erwärmt und verdampft wird, so dass die Temperatur der Verbrennungsgase sinkt. Insbesondere gestattet es eine Anfettung nicht, die Brennkraftmaschine immer in der Weise zu betreiben, wie es beispielsweise für ein vorgesehenes Abgasnachbehandlungssystem erforderlich wäre. Das heißt es ergeben sich Einschränkungen beim Betrieb der Brennkraftmaschine.

Ist eine der Turbinen Teil eines Abgasturboladers ist eine Flüssigkeitskühlung des Zylinderkopfes auch deshalb vorteilhaft, weil der Zylinderkopf einer aufgeladenen Brennkraftmaschine thermisch höher belastet ist als der Zylinderkopf eines herkömmlichen Saugmotors.

Weist der Zylinderkopf einen zumindest teilweise integrierten Kühlmittelmantel auf, sind - wie bereits erwähnt - Ausführungsformen vorteilhaft, bei denen der mindestens eine Kühlmittelmantel des Turbinengehäuses mit dem im Zylinderkopf integrierten Kühlmittelmantel verbunden ist.

Dies gilt sowohl für Ausführungsformen, bei denen das Turbinengehäuse und der Zylinderkopf separate Bauteile darstellen, als auch für Ausführungsformen, bei denen das Gehäuse und der Zylinderkopf ein monolithisches Bauteil bilden.

Ein Verbinden der beiden Kühlmittelkreisläufe gestattet es, beide Kreisläufe mit einer gemeinsamen Pumpe und einem gemeinsamen Wärmetauscher auszustatten und auf diese Weise die Anzahl der Bauteile zu reduzieren und die Kosten zu senken.

Wird ein Steuerelement vorgesehen, sind Ausführungsformen vorteilhaft, bei denen das Steuerelement ein Ventil, ein Schieber, eine Klappe oder dergleichen ist.

Hinsichtlich des Steuerelementes sind Ausführungsformen vorteilhaft, bei denen das Steuerelement elektrisch, hydraulisch, pneumatisch, mechanisch oder magnetisch steuerbar ist, vorzugsweise mittels der Motorsteuerung der Brennkraftmaschine.

Vorteilhaft sind Ausführungsformen des Zylinderkopfes, bei denen das Steuerelement zweistufig schaltbar ausgeführt ist, was die Steuerung vereinfacht und insbesondere Kostenvorteile bietet. Dabei wird eine der beiden Turbinen bei geringen Abgasmengen gemäß einem ersten Schaltungszustand verschlossen, um den Zustrom von Abgas zu unterbinden. Ein vollständiges Verschließen kann in der Regel nicht realisiert werden und ist gegebenenfalls für die Turbine sogar schädlich. Bei größeren Abgasmengen wird die Turbine gemäß einem zweiten Schaltungszustand des Steuerelements geöffnet, um diese Turbine mit Abgas zu beaufschlagen. Die Turbine fungiert folglich als zuschaltbare Turbine, die mittels Steuerelement aktiviert bzw. deaktiviert wird. Vorzugsweise wird die größere Turbine als zuschaltbare Turbine ausgelegt.

Das Steuerelement kann aber auch gemäß einer anderen Ausführungsform stufenlos schaltbar sein, um einen sprunghaften Drehmomentabfall bzw. Drehmomentanstieg bei Betätigen des Steuerelements zu vermeiden.

Vorteilhaft sind daher auch Ausführungsformen des Zylinderkopfes, bei denen das Steuerelement stufenlos verstellbar ist.

Vorteilhaft sind Ausführungsformen des Zylinderkopfes, bei denen das Turbinengehäuse modular aufgebaut ist, in der Art, dass das Turbinengehäuse mindestens zwei Gehäuseteile umfaßt, wobei ein erstes Gehäuseteil die kleinere Turbine und ein zweites Gehäuseteil die größere Turbine zumindest mit aufnimmt.

Die modulare Bauweise des Gehäuses erleichtert die Montage des Gehäuses bzw. der Turbineneinheit, insbesondere das Einbringen der Laufräder in das Gehäuse. Vorteile können sich auch hinsichtlich der Anordnung eines Steuerelements im Gehäuse ergeben.

Zudem eröffnet ein modular aufgebautes Gehäuse den Einsatz unterschiedlicher Werkstoffe für die mindestens zwei Gehäuseteile, wodurch einer unterschiedlich hohen thermischen Belastung der Gehäuseteile Rechnung getragen werden kann.

Falls die Flüssigkeitskühlung des Turbinengehäuses den ersten Gehäuseteil, welcher die kleinere Turbine aufnimmt, nicht in dem Maße kühlt, dass auf den Einsatz thermisch hochbelastbarer Werkstoffe zur Herstellung dieses Gehäuseteils verzichtet werden kann, besteht aufgrund der modularen Bauweise die Möglichkeit, zumindest den zweiten größeren Gehäuseteil aus einem thermisch weniger belastbaren und damit kostengünstigeren Werkstoff zu fertigen.

Aus den genannten Gründen sind sowohl Ausführungsformen des Zylinderkopfes, bei denen die mindestens zwei Gehäuseteile aus unterschiedlichen Werkstoffen gefertigt sind, als auch Ausführungsformen, bei denen die mindestens zwei Gehäuseteile aus gleichen Werkstoffen gefertigt sind, vorteilhaft.

Vorteilhaft sind Ausführungsformen des Zylinderkopfes, bei denen jeder Zylinder mindestens zwei Auslaßöffnungen zum Abführen der Abgase aus dem Zylinder aufweist. Wie bereits erwähnt, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung vorteilhaft ist.

Vorteilhaft sind dabei Ausführungsformen, bei denen zunächst die Abgasleitungen der mindestens zwei Auslaßöffnungen jedes Zylinders zu einer dem Zylinder zugehörigen Teilabgasleitung zusammenführen bevor die Teilabgasleitungen von mindestens zwei Zylindern zu der Gesamtabgasleitung zusammenführen.

Die Gesamtwegstrecke aller Abgasleitungen wird hierdurch verkürzt. Das stufenweise Zusammenführen der Abgasleitungen zu einer Gesamtabgasleitung trägt zudem zu einer kompakteren, d. h. weniger voluminösen, Bauweise des Zylinderkopfes und damit insbesondere zu einer Gewichtsreduzierung und einem effektiveren Packaging im Motorraum bei.

Vorteilhaft können aber auch Ausführungsformen des Zylinderkopfes sein, bei denen jeder Zylinder eine Auslaßöffnung zum Abführen der Abgase aus dem Zylinder aufweist.

Jede der beiden eingesetzten Turbinen kann mit einer variablen Turbinengeometrie ausgestattet werden, die eine weitgehende Anpassung an den jeweiligen Betriebspunkt der Brennkraftmaschine durch Verstellen der Turbinengeometrie bzw. des wirksamen Turbinenquerschnittes gestattet. Dabei sind stromaufwärts des Laufrades der Turbine Leitschaufeln zur Beeinflussung der Strömungsrichtung angeordnet. Im Gegensatz zu den Laufschaufeln des umlaufenden Laufrades rotieren die Leitschaufeln nicht mit der Welle der Turbine, d. h. dem Laufrad. Die Leitschaufeln sind zwar stationär angeordnet, aber nicht völlig unbeweglich, sondern um ihre Achse drehbar, so dass auf die Anströmung der Laufschaufeln Einfluß genommen werden kann.

Verfügt eine Turbine hingegen über eine feste unveränderliche Geometrie, sind die Leitschaufeln nicht nur stationär, sondern zudem völlig unbeweglich, d. h. starr, fixiert.

Wird eine der beiden Turbinen mit einer variablen Turbinengeometrie ausgestattet, kann diese Turbine als Steuerelement zur Aufteilung des Abgasstroms dienen. Denn wird der Strömungsquerschnitt dieser Turbine durch Verstellen der Leitschaufeln verkleinert, erhöht sich der Strömungswiderstand dieser Turbine und es wird mehr Abgas auf die andere Turbine geleitet bzw. umgeleitet.

Wie bereits in anderem Zusammenhang erwähnt wurde, ist es grundsätzlich vorteilhaft, eine der beiden Turbinen als zuschaltbare Turbine auszubilden, welche bei kleineren Abgasmengen deaktiviert bleibt. Das gesamte Abgas wird dann der anderen offen verbleibenden Turbine zugeführt, vorzugsweise der kleineren Turbine. Auf diese Weise können ausreichend hohe Ladedrücke bei nur geringen Abgasmengen generiert werden. Überschreitet die Abgasmenge eine vorgebbare Abgasmenge, wird die zuschaltbare Turbine aktiviert, d. h. zugeschaltet.

Vorzugsweise wird also die größere Turbine als zuschaltbare Turbine ausgebildet. Die kleinere Turbine wird prinzipbedingt auf kleine Abgasmengen ausgelegt und unter sämtlichen Betriebsbedingungen mit Abgas versorgt.

Die zweite der Erfindung zugrunde liegende Teilaufgabe, nämlich ein Verfahren zum Betreiben einer Brennkraftmaschine mit einem Zylinderkopf einer zuvor beschriebenen Ausführungsform aufzuzeigen, wird gelöst durch ein Verfahren, bei dem
- die größere Turbine als zuschaltbare Turbine ausgebildet wird,
- ein Steuerelement zur Aufteilung des Abgasstroms auf die beiden Turbinen vorgesehen wird,
- bei geringen Abgasmengen die zuschaltbare Turbine deaktiviert wird, indem der Zustrom von Abgas zu dieser Turbine mittels Steuerelement unterbunden wird, und
- bei zunehmender Abgasmenge diese zuschaltbare Turbine durch Betätigen des Steuerelements aktiviert und mit Abgas beaufschlagt wird, sobald die Abgasmenge eine vorgebbare Abgasmenge überschreitet.

Das im Zusammenhang mit dem erfindungsgemäßen Zylinderkopf Gesagte gilt ebenfalls für das erfindungsgemäße Verfahren.

Wird der erfindungsgemäße Zylinderkopf für eine Brennkraftmaschine mit Quantitätsregelung verwendet, bei der die Last über die Menge an Frischgemisch gesteuert wird, bedeutet die erfindungsgemäße Vorgehensweise beim Betreiben dieser Brennkraftmaschine, dass die zuschaltbare Turbine aktiviert wird, wenn - eine konkrete Drehzahl vorausgesetzt - die Last der Brennkraftmaschine eine vorgebbare Last übersteigt, da die Abgasmenge bei einer derartigen Brennkraftmaschine maßgeblich von der Last abhängt, wobei die Abgasmenge mit zunehmender Last steigt und mit abnehmender Last sinkt. Prinzipbedingt nimmt die Abgasmenge auch bei konstanter Last mit zunehmender Drehzahl zu.

Liegt der Brennkraftmaschine hingegen eine Qualitätsregelung zugrunde, bei der die Last über die Zusammensetzung des Frischgemischs gesteuert wird und sich die Abgasmenge im Wesentlichen mit der Drehzahl ändert, wird gemäß dem erfindungsgemäßen Verfahren zum Betreiben dieser Brennkraftmaschine die zuschaltbare Turbine aktiviert, wenn die Drehzahl der Brennkraftmaschine eine vorgebbare Drehzahl übersteigt, da die Abgasmenge vorliegend mit zunehmender Drehzahl steigt und mit abnehmender Drehzahl sinkt.

Handelt es sich um eine - insbesondere mittels Abgasturboaufladung - aufgeladene Brennkraftmaschine, muß zusätzlich berücksichtigt werden, dass sich der Ladedruck auf der Ansaugseite mit der Last und/oder der Drehzahl ändern kann und Einfluß auf die Abgasmenge hat. Die vorstehenden und vereinfacht dargestellten Zusammenhänge zwischen der Abgasmenge und der Last bzw. Drehzahl gelten dann folglich nicht in dieser allgemeinen Form. Daher stellt das erfindungsgemäße Verfahren ganz allgemein auf die Abgasmenge ab und nicht auf die Last bzw. Drehzahl.

Vorteilhaft sind Verfahrensvarianten, bei denen die zuschaltbare Turbine nur dann aktiviert wird, wenn die Abgasmenge der Brennkraftmaschine eine vorgebbare Abgasmenge übersteigt und für eine vorgebbare Zeitspanne Δt₁ größer ist als diese vorgebbare Abgasmenge.

Die Einführung einer zusätzlichen Bedingung für das Aktivieren der zuschaltbaren Turbine soll einen zu häufigen Moduswechsel verhindern, wenn die Abgasmenge nur kurzzeitig eine vorgebbare Abgasmenge überschreitet und dann wieder fällt bzw. um den vorgegebenen Wert für die Abgasmenge schwankt, ohne dass das Überschreiten ein Aktivieren der zuschaltbaren zweiten Turbine rechtfertigen würde.

Beim Deaktivieren der zuschaltbaren Turbine wird vorteilhafterweise analog vorgegangen. Das heißt, die zuschaltbare Turbine wird wieder deaktiviert, sobald die Abgasmenge eine vorgebbare Abgasmenge unterschreitet.

Vorteilhaft sind dann Verfahrensvarianten, bei denen die Deaktivierung vorgenommen wird, wenn die Abgasmenge die vorgebbare Abgasmenge unterschreitet und für eine vorgebbare Zeitspanne Δt₂ kleiner ist als die vorgebbare Abgasmenge.

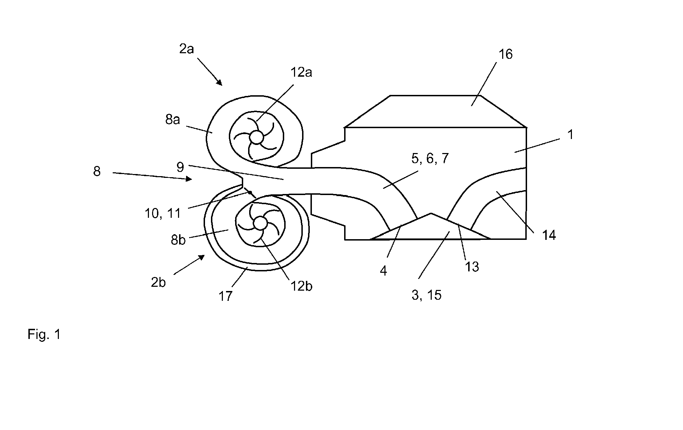

Im Folgenden wird die Erfindung anhand eines Ausführungsbeispiels gemäß der Figur 1 näher beschrieben. Hierbei zeigt:
- Fig. 1: im Querschnitt eine erste Ausführungsform des Zylinderkopfes mit zwei parallel angeordneten Turbinen.

Figur 1 zeigt im Querschnitt eine erste Ausführungsform des Zylinderkopfes 1 mit zwei parallel angeordneten Turbinen 2a, 2b.

Beide Turbinen 2a, 2b, d. h. die Laufräder 12a, 12b dieser beiden Turbinen 2a, 2b, sind parallel und in einem gemeinsamen Turbinengehäuse 8 angeordnet, welches zum Zuführen von Abgas mit einem Eintrittsbereich 9 ausgestattet ist. Im Gehäuse 8 bzw. Eintrittsbereich 9 ist ein Steuerelement 10 in Gestalt einer Klappe 11 zur Aufteilung des Abgasstroms auf die beiden Turbinen 2a, 2b vorgesehen, wobei die größere Turbine 2b als zuschaltbare Turbine 2b ausgebildet ist.

Die zuschaltbare Turbine 2b ist in dem in Figur 1 dargestellten Schaltungszustand des Steuerelements 10 deaktiviert, d. h. der Zustrom von Abgas zu dieser Turbine 2b wird im momentanen Betriebszustand unterbunden und das gesamte Abgas durch die erste kleinere Turbine 2a geleitet. Das Turbinengehäuse 8 ist modular aufgebaut und umfaßt zwei Gehäuseteile 8a, 8b. Die kleinere Turbine 2a wird von einem ersten Gehäuseteil 8a aufgenommen. Die größere Turbine 2b ist in einem zweiten Gehäuseteil 8b angeordnet, welches zur Ausbildung einer Flüssigkeitskühlung mit einem Kühlmittelmantel 17 ausgestattet ist. Der Zylinderkopf 1 ist ebenfalls mit einem integrierten Kühlmittelmantel ausgestattet, der mit dem im Turbinengehäuse 8 integrierten Kühlmittelmantel 17 verbunden ist (nicht dargestellt).

Der Zylinderkopf 1 ist an einer Montage-Stirnseite zur Ausbildung von Brennräumen 15 mit einem Zylinderblock verbindbar. Der Zylinder 3 weist eine Einlaßöffnung 13 auf, über welche der Brennraum 15 via Ansaugleitung 14 im Rahmen des Ladungswechsels mit Frischgemisch versorgt wird. Das Ausschieben der Verbrennungsgase erfolgt via Auslaßöffnung 4, an welche sich eine Abgasleitung 5 anschließt. Der Ventiltrieb ist mit einer Ventilhaube 16 abgedeckt.

Die Abgasleitungen 5 führen unter Ausbildung eines integrierten Abgaskrümmers 6 innerhalb des Zylinderkopfes 1 zu einer Gesamtabgasleitung 7 zusammen, wobei die Gesamtabgasleitung 7 in den Eintrittsbereich 9 des Gehäuses 8 mündet bzw. übergeht. Von dort werden die heißen Abgase mittels Steuerelement 10 auf beide Turbinen 2a, 2b verteilt, wodurch die Laufräder 12a, 12b in Drehung versetzt werden.

Durch Betätigen des Steuerelements 10, d. h. durch Verschwenken der drehbar gelagerten Klappe 11 wird die zuschaltbare Turbine 2b aktiviert bzw. deaktiviert.

### Bezugszeichen

- 1: Zylinderkopf
- 2a: erste Turbine
- 2b: zweite Turbine, zuschaltbare Turbine
- 3: Zylinder
- 4: Auslaßöffnung
- 5: Abgasleitung
- 6: Abgaskrümmer
- 7: Gesamtabgasleitung
- 8: Turbinengehäuse
- 8a: erstes Gehäuseteil
- 8b: zweites Gehäuseteil
- 9: Eintrittsbereich
- 10: Steuerelement
- 11: Klappe
- 12a: Laufrad
- 12b: Laufrad
- 13: Einlaßöffnung
- 14: Ansaugleitung
- 15: Brennraum
- 16: Ventilhaube
- 17: Kühlmittelmantel

## Patentansprüche

1. Zylinderkopf (1) mit parallel angeordneten Turbinen (2a, 2b), der
- mindestens zwei Zylinder (3) aufweist, wobei jeder Zylinder (3) mindestens eine Auslaßöffnung (4) zum Abführen der Abgase aus dem Zylinder (3) aufweist und sich an jede Auslaßöffnung (4) eine Abgasleitung (5) anschließt, und bei dem
- die Abgasleitungen (5) von mindestens zwei Zylindern (3) unter Ausbildung eines integrierten Abgaskrümmers (6) innerhalb des Zylinderkopfes (1) zu einer Gesamtabgasleitung (7) zusammenführen, wobei stromabwärts des Abgaskrümmers (6) zwei parallel angeordnete unterschiedlich große Turbinen (2a, 2b) vorgesehen sind,
**dadurch gekennzeichnet, dass**
- die zwei Turbinen (2a, 2b) ein gemeinsames Turbinengehäuse (8) aufweisen, welches zum Zuführen von Abgas mit einem Eintrittsbereich (9) ausgestattet ist, wobei der Gehäuseteil (8b) des Turbinengehäuses (8), welcher die größere Turbine (2b) aufnimmt, zur Ausbildung einer Flüssigkeitskühlung mit mindestens einem Kühlmittelmantel (17) ausgestattet ist.

2. Zylinderkopf (1) nach Anspruch 1, **dadurch gekennzeichnet, dass** ein Steuerelement (10) zur Aufteilung des Abgasstroms auf die beiden Turbinen (2a, 2b) vorgesehen ist.

3. Zylinderkopf (1) nach Anspruch 2, **dadurch gekennzeichnet, dass** das Steuerelement (10) im Gehäuse (8) angeordnet ist.

4. Zylinderkopf (1) nach einem der vorherigen Ansprüche, **dadurch gekennzeichnet, dass** das Turbinengehäuse (8) und der Zylinderkopf (1) separate Bauteile darstellen, welche kraftschlüssig, formschlüssig und/oder stoffschlüssig miteinander verbunden sind.

5. Zylinderkopf (1) nach einem der Ansprüche 1 bis 3, **dadurch gekennzeichnet, dass** das Turbinengehäuse (8) zumindest teilweise im Zylinderkopf (1) integriert ist, so dass der Zylinderkopf (1) und zumindest ein Teil des Turbinengehäuses (8) ein monolithisches Bauteil bilden.

6. Zylinderkopf (1) nach einem der vorherigen Ansprüche, **dadurch gekennzeichnet, dass** der Zylinderkopf (1) mit einem zumindest teilweise im Zylinderkopf (1) integrierten Kühlmittelmantel ausgestattet ist.

7. Zylinderkopf (1) nach Anspruch 6, **dadurch gekennzeichnet, dass** der mindestens eine Kühlmittelmantel (17) des Turbinengehäuses mit dem im Zylinderkopf (1) integrierten Kühlmittelmantel verbunden ist.

8. Zylinderkopf (1) nach einem der vorherigen Ansprüche, **dadurch gekennzeichnet, dass** das Turbinengehäuse (8) modular aufgebaut ist, in der Art, dass das Turbinengehäuse (8) mindestens zwei Gehäuseteile (8a, 8b) umfaßt, wobei ein erstes Gehäuseteil (8a) die kleinere Turbine (2a) und ein zweites Gehäuseteil (8b) die größere Turbine (2b) zumindest mit aufnimmt.

9. Zylinderkopf (1) nach Anspruch 8, **dadurch gekennzeichnet, dass** die mindestens zwei Gehäuseteile (8a, 8b) aus unterschiedlichen Werkstoffen gefertigt sind.

10. Zylinderkopf (1) nach Anspruch 8, **dadurch gekennzeichnet, dass** die mindestens zwei Gehäuseteile (8a, 8b) aus gleichen Werkstoffen gefertigt sind.

11. Zylinderkopf (1) nach einem der vorherigen Ansprüche, **dadurch gekennzeichnet, dass** jeder Zylinder (3) mindestens zwei Auslaßöffnungen (4) zum Abführen der Abgase aus dem Zylinder (3) aufweist.

12. Verfahren zum Betreiben einer Brennkraftmaschine mit einem Zylinderkopf (1) gemäß einem der vorherigen Ansprüche, **dadurch gekennzeichnet, dass**
- die größere Turbine (2b) als zuschaltbare Turbine (2b) ausgebildet wird,
- ein Steuerelement (10) zur Aufteilung des Abgasstroms auf die beiden Turbinen (2a, 2b) vorgesehen wird,
- bei geringen Abgasmengen diese zuschaltbare Turbine (2b) deaktiviert wird, indem der Zustrom von Abgas zu dieser Turbine (2b) mittels Steuerelement (10) unterbunden wird, und
- bei zunehmender Abgasmenge diese zuschaltbare Turbine (2b) durch Betätigen des Steuerelements (10) aktiviert und mit Abgas beaufschlagt wird, sobald die Abgasmenge eine vorgebbare Abgasmenge überschreitet.
